(19) **Europäisches Patentamt / European Patent Office / Office européen des brevets**

(11) **EP 2 823 562 B1**

(12) **FASCICULE DE BREVET EUROPEEN**

(45) Date de publication et mention de la délivrance du brevet:
**05.12.2018  Bulletin 2018/49**

(21) Numéro de dépôt: **13711088.8**

(22) Date de dépôt: **04.03.2013**

(51) Int Cl.:
*H02P 27/08* (2006.01)  *H02M 7/5387* (2007.01)
*B60L 15/00* (2006.01)  *H02P 1/00* (2006.01)
*B60L 11/18* (2006.01)  *H02M 7/5395* (2006.01)
*H02M 1/32* (2007.01)

(86) Numéro de dépôt international:
**PCT/FR2013/050452**

(87) Numéro de publication internationale:
**WO 2013/132182 (12.09.2013 Gazette 2013/37)**

(54) **PROCEDE DE PILOTAGE D'UN PONT DE PUISSANCE, DISPOSITIF DE PILOTAGE, PONT DE PUISSANCE ET SYSTEME DE MACHINE ELECTRIQUE TOURNANTE CORRESPONDANTS**

VERFAHREN ZUR STEUERUNG EINER LEISTUNGSBRÜCKE UND ZUGEHÖRIGE STEUERUNGSVORRICHTUNG, LEISTUNGSBRÜCKE UND ELEKTRISCHE DREHMASCHINE

METHOD FOR CONTROLLING A POWER BRIDGE, AND CORRESPONDING CONTROL DEVICE, POWER BRIDGE AND ROTARY ELECTRIC MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.03.2012  FR 1252075**

(43) Date de publication de la demande:
**14.01.2015  Bulletin 2015/03**

(73) Titulaire: **Valeo Equipements Electriques Moteur 94046 Créteil Cedex (FR)**

(72) Inventeur: **CHEMIN, Michaël F-94510 La Queue en Brie (FR)**

(74) Mandataire: **Cardon, Nicolas et al VALEO SYSTEMES DE CONTROLE MOTEUR Service Propriété Intellectuelle Immeuble Le Delta 14, avenue des Béguines BP 68532 Cedex 95892 Cergy-Pontoise (FR)**

(56) Documents cités:
**WO-A1-02/31952       DE-A1-102008 054 744 JP-A- 2003 189 668**

- **ALAN ELBANHAWY: "A simple guide to selecting power Mosfets", EDNMAG, 22 novembre 2001 (2001-11-22), pages 87-90, XP055045881,**

**Description**

**DOMAINE TECHNIQUE DE L'INVENTION.**

La présente invention concerne un procédé de pilotage d'un pont de puissance alimentant une charge électrique monophasée ou polyphasée ainsi que le dispositif de pilotage correspondant.

L'invention concerne aussi un pont de puissance associé ainsi que son application à un système de machine électrique tournante, notamment de véhicule automobile.

**ARRIERE PLAN TECHNOLOGIQUE DE L'INVENTION.**

Les machines électriques tournantes réalisées dans une grande gamme de puissances et de vitesses sont de nos jours d'utilisation croissante dans le domaine des véhicules automobiles comme suite à des considérations de protection de l'environnement.

Elles trouvent des applications aussi bien dans les véhicules de type « tout électrique » que dans les véhicules à bas $CO_2$ de types dits « mild-hybrid » et « full-hybrid » (en terminologie anglaise).

Les applications « mild-hybrid » concernent généralement des machines électriques de l'ordre de 8 à 10 KW, par exemple, un moteur électrique monté en face avant d'un moteur thermique et couplé à celui-ci par une courroie de transmission. Il est possible avec un tel moteur électrique de réduire la cylindrée de la motorisation thermique (« engine downsizing » en terminologie anglaise) en prévoyant une assistance électrique en couple qui fournit un appoint de puissance, notamment lors des reprises. De plus, une traction à faible vitesse, par exemple en environnement urbain, peut également être assurée par ce même moteur électrique.

Les applications de type « full-hybrid» concernent généralement des moteurs de 30 à 50 KW pour des architectures de type série et/ou parallèle avec un niveau d'intégration plus abouti du ou des moteurs électriques dans la chaîne de traction du véhicule.

Ces machines sont des machines polyphasées alimentées à partir de la batterie de bord par un onduleur permettant de générer les différents courants de phases.

Les onduleurs les plus couramment utilisés sont des onduleurs à deux niveaux, c'est-à-dire qu'ils sont constitués d'un pont de puissance comprenant plusieurs bras (généralement un bras par phase) comportant chacun deux semi-conducteurs de puissance fonctionnant en commutation. Un point milieu de chaque couple est relié à une phase de la machine électrique tournante.

Les semi-conducteurs de puissance sont, soit des transistors bipolaires, auquel cas ils sont associés à des diodes de roue libre, soit des transistors de type MOSFET, dont la diode intrinsèque permet une circulation du courant dans deux sens.

Ces commutateurs à semi-conducteur sont commandés complémentairement par une unité électronique de commande de manière à générer les tensions de phases nécessaires au fonctionnement de la machine électrique selon une technique bien connue de modulation en largeur d'impulsion (ML1).

Le niveau de puissance élevé atteint par ces machines conduit les constructeurs à chercher à améliorer le rendement des onduleurs associés en limitant les pertes par commutation et les pertes par conduction.

Dans le document FR2895597, il est proposé de limiter les pertes par commutation. Pour ce faire, on ajuste une tension de mode commun de façon que l'une des tensions de phases soit à la masse ou au +BAT, en privilégiant celle qui fait passer le plus fort courant. Ainsi il y a en permanence un bras qui ne commute pas, ce qui permet de diminuer les pertes dans l'onduleur.

Dans le document JP2003189668, il est proposé un pont de puissance dont chaque bras composé de dispositifs de commutation permet de générer un courant de phase d'un moteur électrique auquel le pont de puissance est relié. Chaque bras comprend des électroniques de puissance semi-conducteur dont la commutation est pilotée par une électronique de commande.

Dans la technique MLI, une fréquence de découpage est généralement fixe tandis que les formes d'onde des tensions de phases (sinusoïdales, par exemple) sont obtenues en modulant les rapports cycliques à une fréquence électrique dépendant d'une vitesse de rotation de la machine.

De manière générale, la fréquence électrique est de plusieurs centaines de hertz. La température de jonction des MOSFET (qui est le reflet des pertes) ne suit pas cette variation instantanée car elle est filtrée par les capacités thermiques de l'assemblage puce-boîtier-substrat.

Or, dans les phases de démarrage de la machine électrique tournante ou en "rotor bloqué", la fréquence électrique est très faible, voire nulle. Le filtrage thermique de l'assemblage n'opère plus: les pertes à prendre en compte sont les pertes instantanées et non moyennes.

**DESCRIPTION GENERALE DE L'INVENTION.**

La présente invention vise donc à minimiser les pertes instantanées dans les bras d'un pont de puissance afin de maximiser le courant admissible dans la limite de la dissipation thermique des bras aux faibles fréquences électriques.

Elle a précisément pour objet un procédé de pilotage d'un pont de puissance comprenant plusieurs bras comportant chacun en série des commutateurs à semi-conducteur supérieur et inférieur destinés à être reliés en parallèle aux première et seconde bornes d'une source de tension commune, au moins un point milieu de chacun des bras étant destiné à être relié respectivement à au moins une phase d'une charge électrique.

Le procédé dont il s'agit est du type ceux consistant à commander complémentairement les commutateurs à semi-conducteur supérieur et inférieur par des impulsions présentant un rapport cyclique de consigne déterminé en fonction:

- d'une première tension de phase de consigne, par rapport à une borne de référence de la charge électrique;
- d'une tension de mode commun, par rapport à l'une des première ou seconde bornes, contrôlant des pertes par commutation des commutateurs à semi-conducteur supérieur et inférieur.

Le procédé selon l'invention est remarquable en ce que cette tension de mode commun est déterminée de manière à obtenir un équilibrage des pertes par commutation et de pertes par conduction entre les commutateurs à semi-conducteur supérieur et inférieur.

Selon l'invention, cet équilibrage est avantageusement mis en oeuvre uniquement quand une fréquence électrique modulant le rapport cyclique de consigne est inférieure ou égale à un seuil prédéterminé.

De préférence, cette tension de mode commun est déterminée au contraire de manière à minimiser les pertes par commutation quand la fréquence électrique est supérieure à ce seuil prédéterminé.

Le procédé de pilotage d'un pont de puissance selon l'invention est en outre remarquable en ce que cet équilibrage est réalisé en choisissant un rapport cyclique d'équilibrage $RC'_i$ de manière à vérifier sensiblement la relation:

$$RC'_0 * R_{onH} * Iph_0{}^2 + P_{comm.} = (1 - RC'_0) * R_{onL} * Iph_0{}^2$$

où $R_{onH}$ et $R_{onL}$ sont respectivement les résistances de conduction (20) des commutateurs à semi-conducteur supérieur et inférieur (4), $P_{comm}$ représente les pertes par commutation et $Iph_i$ une intensité de phase circulant dans la phase considérée, dans une limite où le rapport cyclique d'équilibrage conduit à une première tension de phase d'équilibrage dont une différence courante avec une seconde tension de phase d'équilibrage est identique à une différence initiale entre la première tension de phase de consigne et une seconde tension de phase de consigne.

L'équilibrage est réalisé de préférence uniquement dans un bras de référence où l'intensité de phase est la plus grande parmi les bras du pont de puissance.

Il est obtenu fort avantageusement en modifiant le rapport cyclique de consigne correspondant à chacun des bras du pont de puissance par un écart de rapport cyclique entre une valeur de référence d'un rapport cyclique de consigne et une valeur d'équilibrage d'un rapport cyclique d'équilibrage déterminées dans ce bras de référence.

L'invention concerne également un dispositif de pilotage d'un pont de puissance destiné à être relié à une charge électrique et apte à la mise en oeuvre du procédé décrit ci-dessus.

Ce dispositif de pilotage est remarquable en ce qu'il comprend une logique de commande représentative du procédé selon l'invention ou une mémoire informatique comportant des instructions représentatives de ce procédé.

Dans le cadre de l'invention, un pont de puissance apte à être piloté par le dispositif de pilotage précédent comprend généralement plusieurs bras comportant chacun en série des commutateurs à semi-conducteur supérieur et inférieur.

Ces commutateurs à semi-conducteur supérieur et inférieur sont avantageusement constitués chacun d'un élément de commutation à semi-conducteur et d'une diode de roue libre en parallèle.

De préférence, la diode de roue libre est une diode intrinsèque d'un transistor de type MOSFET.

On tirera bénéfice d'un système de machine électrique tournante selon l'invention comprenant:

- une charge électrique polyphasée;
- une source de tension;
- un pont de puissance, présentant les caractéristiques spécifiées ci-dessus, relié en aval à cette charge électrique et en amont à la source de tension;
- un dispositif de pilotage décrit précédemment.

Ces quelques spécifications essentielles auront rendu évidents pour l'homme de métier les avantages apportés par l'invention par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

**BREVE DESCRIPTION DES DESSINS.**

La **Figure 1** est un schéma de principe d'un système de machine électrique tournante comprenant un pont de puissance piloté par le procédé selon l'invention.

La **Figure 2** est un organigramme général représentant le procédé de pilotage d'un pont de puissance selon l'invention.

La **Figure 3** représente schématiquement l'équilibrage des pertes dans un bras d'un pont de puissance selon l'invention.

**DESCRIPTION DES MODES DE REALISATION PREFERES DE L'INVENTION.**

Les modes de réalisation préférés de l'invention correspondent à un onduleur alimentant une machine électrique tournante polyphasée 1 à partir d'une batterie 2.

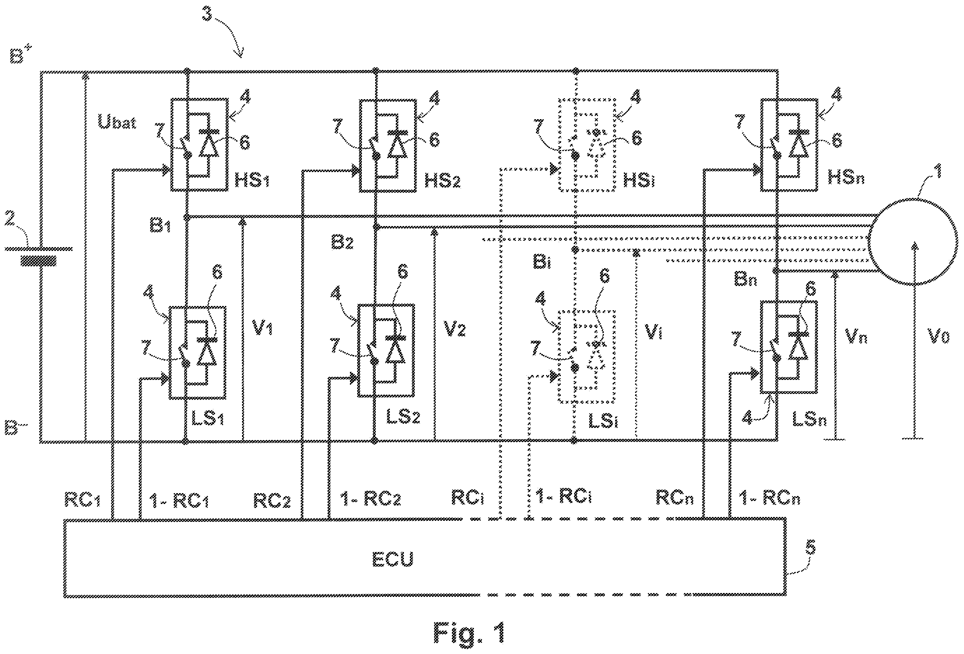

Il s'agit en général d'une machine 1 présentant un nombre n d'enroulements de phases connectés aux points milieux des bras $B_1$, $B_2$, $B_i$, $B_n$ d'un pont de puissance 3 à semi-conducteurs tel que représenté sur la **Figure 1** (n est de préférence égal à 3).

Selon un agencement connu, le pont de puissance 3 présente des bras $B_1$, $B_2$, $B_i$, $B_n$ comprenant chacun des commutateurs à semi-conducteur pilotables 4 reliant, d'une part, les enroulements de phases au pôle positif $B^+$ de la batterie 2 (commutateurs à semi-conducteur supérieurs $HS_1$, $HS_2$, $HS_i$, $HS_n$ du côté "high-side"), et, d'autre part, au pôle négatif $B^-$ de la batterie 2 (commutateurs à semi-conducteur inférieurs $LS_1$, $LS_2$, $LS_i$, $LS_n$ du côté "low-side"),

Une unité électronique de commande 5 ferme et ouvre alternativement les commutateurs "high-side" et "low-side" 4, selon un mode de fonctionnement bien connu d'un onduleur 3, afin d'ajuster les courants $Iph_1$, $Iph_2$, $Iph_i$, $Iph_n$ dans les phases.

Le rapport de conduction commutateur supérieur/ commutateur inférieur est appelé "rapport cyclique" (RC). Une tension de la batterie 2 étant Ubat, une tension de phase Uph appliquée à la machine est alors:

$$Uph= RC*Ubat$$

En modulant le rapport cyclique RC, on module la tension de phase Uph appliquée à la machine 1, et par conséquent le courant de phase Iph.

Les commutateurs à semi-conducteur 4 utilisés sont de préférence des transistors de puissance de type MOSFET, dont la diode intrinsèque 6 assure la caractéristique d'être bidirectionnel en courant.

Alternativement, les commutateurs à semi-conducteur 4 sont constitués d'un élément de commutation 7 tel qu'un transistor de puissance bipolaire 7 et d'une diode de roue libre 6.

Les pertes dans les MOSFET sont deux types: par conduction $P_{cond.}$ et par commutation $P_{comm.}$

Les pertes par conduction $P_{cond.}$ dans un bras $B_i$ sont égales à $R_{on}*Iph_i^2$ ($R_{on}$ étant une résistance du MOSFET à l'état passant) quelque soit le rapport cyclique RC, car le courant de phase Iphi circule soit dans le commutateur supérieur $HS_i$, soit dans le commutateur inférieur $LS_i$, donc toujours dans un seul MOSFET.

Les pertes par commutation $P_{comm.}$ dépendent de la tension et du courant commuté. Ces pertes ne sont aussi dissipées que dans un seul MOSFET, inférieur ou supérieur en fonction du sens du courant de phase.

Ainsi que cela a été rappelé en préambule, il est connu, notamment du document FR2895597, de diminuer les pertes par commutation $P_{comm.}$ en limitant le nombre de commutations en modifiant une tension de mode commun $V_0$.

Cette stratégie présente un inconvénient, notamment quand le rotor de la machine électrique 1 est bloqué, comme le montrent les deux exemples numériques suivants.

Exemple 1

Un système 1, 2, 3, 4, 5 comporte une batterie 2 présentant une tension $U_{bat}$ de 100V et une machine triphasée 1 dont le rotor est bloqué.

L'unité de commande électronique 5 génère trois rapports cycliques de consigne:

$$RC_1 = 0,60 \qquad RC_2 = 0.45 \qquad RC_3 = 0.45$$

produisant trois tensions de phases de consigne (par rapport à la borne de masse B-):

$$V_1 = 60\ V \qquad V_2 = 45\ V \qquad V_3 = 45\ V$$

La tension de mode commun $V_0$ est $(V_1 + V_2 + V_3)/3 = 50\ V$

Les tensions appliquées sur les enroulements de phases sont:

$$V_1 - V_2 = 15\ V \qquad V_2 - V_3 = 0\ V \qquad V_3 - V_1 = -15\ V$$

qui génèrent les intensités de phases (en unité arbitraire):

$$Iph_1 = +1 \qquad Iph_2 = -1/2 \qquad Iph_3 = -1/2$$

Les pertes dans le MOSFET supérieur $HS_1$ du bras $B_1$ sont:

- pertes par conduction: $P_{cond} = RC_1 * R_{on} * Iph_1^2$
- pertes par commutation: $P_{comm.} = 1/3 * R_{on} * Iph_1^2$ (par simplification) Les pertes totales dans le MOSFET supérieur $HS_1$ sont donc:

$$P_{cond} + P_{comm.} = (RC_1 + 1/3) * R_{on} * Iph_1^2 \quad \text{soit: } 0.93 * R_{on}$$

Les pertes dans le MOSFET inférieur $LS_1$ du bras $B_1$ sont uniquement les pertes par conduction, car les pertes de commutation ont déjà été supportées par le MOSFET supérieur $HS_1$.

Les pertes totales dans le MOSFET inférieur $LS_1$ sont donc:

$$P_{cond.} = (1 - RC_1) * R_{on} * Iph_1^2 \quad \text{soit: } 0.40 * R_{on}$$

Les pertes globales du bras sont par conséquent:

$$(0.6 + 1/3) * R_{on} + 0.40 * R_{on} = 4/3 * R_{on}$$

Exemple 2

La stratégie de diminution des pertes en limitant le nombre de commutations, suggère de bloquer le bras où l'intensité de phase est la plus grande, en l'occurrence le bras $B_1$.

Pour ce faire le rapport cyclique de consigne $RC_1$ devient un rapport cyclique optimisé $RCop_1$ tel que $RCop_1 = 1$.

Les deux autres rapports cycliques de consigne $RC_2$ et $RC_3$ sont augmentés de $RCop_1 - RC_1$ pour conserver les mêmes différences de tensions entre phases en augmentant la tension de mode commun:

$$RCop_1 = 1 \qquad RCop_2 = 0.85 \qquad RCop_3 = 0.85$$

$$Vop_1 = 100\ V \qquad Vop_2 = 85\ V \qquad Vop_3 = 85\ V$$

La tension de mode commun optimisée est $Vop_0 = 90\ V$.

La machine 1 voit toujours les mêmes tensions de phases:

$$Vop_1 - Vop_2 = 15\ V \quad Vop_2 - Vop_3 = 0\ V \qquad Vop_3 - Vop_1 = -15\ V$$

Dans ce cas les pertes sont uniquement des pertes par conduction, puisque le bras $B_1$ ne commute plus. Les pertes totales sont donc:

$$P_{cond} = RCop_1 * R_{on} * Iph_1{}^2 \text{ soit } R_{on}$$

Les pertes dans le MOSFET supérieur $HS_1$ résultant de la stratégie connue de minimisation sont donc en fait supérieures de 7% à celles résultant d'un pilotage MLI sans optimisation.

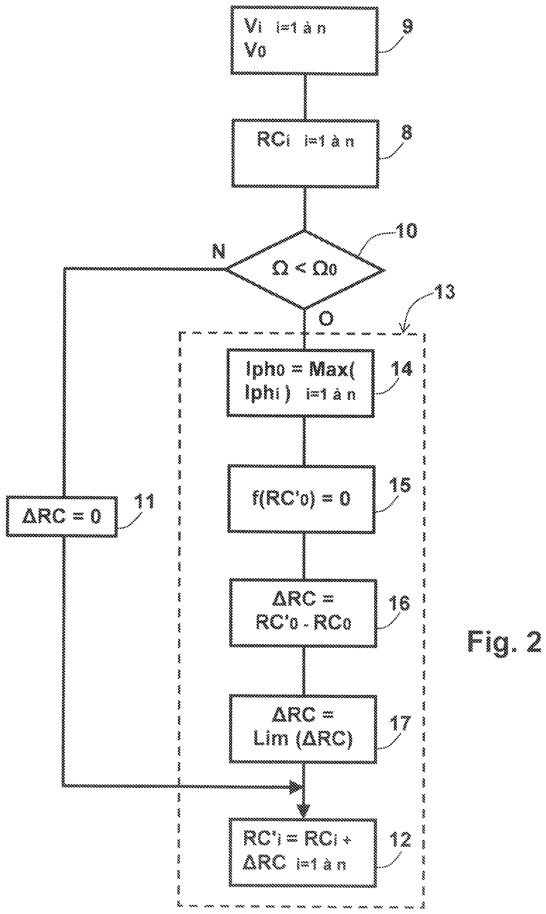

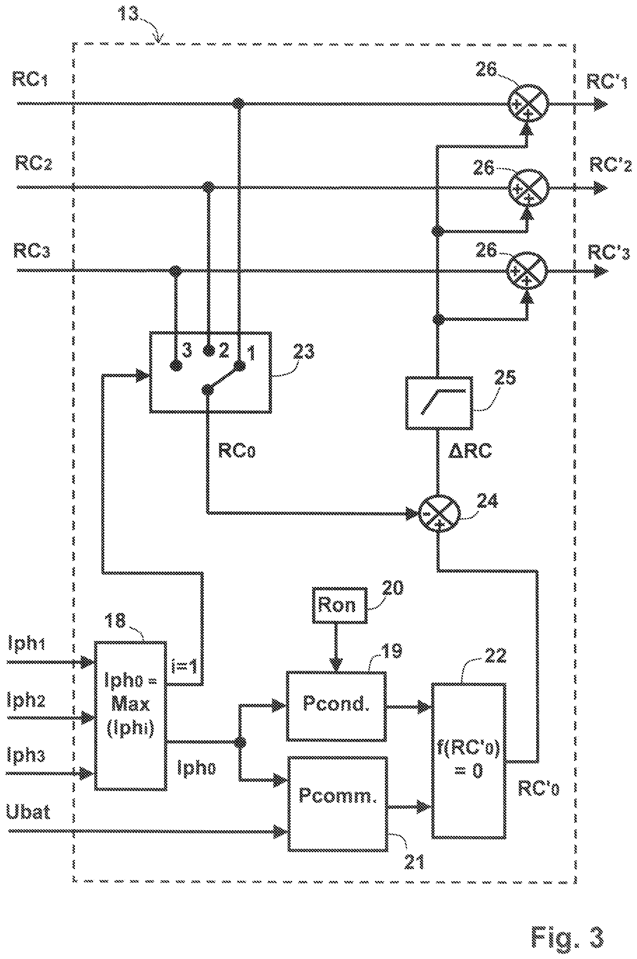

Le procédé de pilotage d'un pont de puissance 3 selon l'invention tend au contraire à limiter les pertes dans un tel MOSFET, au démarrage de la machine 1 et quand le rotor est bloqué, en acceptant une légère dégradation du rendement global de l'onduleur 3 dans ces circonstances, comme il le sera montré ci-dessous en liaison avec les **Figure 2 et 3.**

Le procédé selon l'invention consiste au départ à générer de manière classique dans une étape préliminaire 8 les rapports cycliques de consigne $RC_1$, $RC_2$, $RC_i$, $RC_n$ correspondant aux tensions de phases de consigne $V_1$, $V_2$, $V_i$, $V_n$ d'un pilotage vectoriel de la machine 1 fournies en entrée 9.

Un test 10 permet de déterminer si la machine 1 est en cours de démarrage ou rotor bloqué en comparant une fréquence électrique modulant ces rapports cycliques de consigne $RC_1$, $RC_2$, $RC_i$, $RC_n$ à un seuil prédéterminé, ou de manière équivalente en comparant une vitesse de rotation $\Omega$ de la machine 1 à une vitesse de rotation de référence $\Omega_0$.

Dans le cas où la vitesse de rotation $\Omega$ est supérieure à $\Omega_0$, la machine 1 n'est pas en cours de démarrage, ou le rotor n'est pas bloqué, le procédé selon l'invention n'apporte de préférence aucune modification 11 aux rapports cycliques de consigne $RC_1$, $RC_2$, $RC_i$, $RC_n$ qui sont transférés à l'identique en sortie 12.

Alternativement, les rapports cycliques de consigne $RC_1$, $RC_2$, $RC_i$, $RC_n$ sont modifiés de manière à ce que la tension de mode commun $V_0$ minimise les pertes par commutation $P_{comm.}$(processus non représenté).

Dans le cas où la vitesse de rotation $\Omega$ est inferieure ou égale à $\Omega_0$, la machine 1 est en cours de démarrage, ou le rotor est bloqué, et le procédé selon l'invention procède à un processus d'équilibrage 13 des pertes des commutateurs à semi-conducteur 4 du bras $B_1$, $B_2$, $B_i$, $B_n$ où circule une plus grande intensité de phase $Iph_1$, $Iph_2$, $Iph_i$, $Iph_n$.

Une première étape 14 de ce processus d'équilibrage 13 consiste donc à sélectionner un bras de référence du pont de puissance 3 dans lequel une intensité de phase $Iph_1$, $Iph_2$, $Iph_i$, $Iph_n$ a une plus grande valeur $Iph_0$.

Une deuxième étape 15 de ce processus d'équilibrage 13 consiste à équilibrer les pertes par commutation $P_{comm.}$ et par conduction $P_{cond.}$ entre les commutateurs à semi-conducteur supérieur $HS_i$ et inférieur $LS_i$ dans ce bras de référence.

Les pertes par commutation $P_{comm.}$ sont indépendantes du rapport cyclique et ne sont dissipées que par un seul des commutateurs à semi-conducteur 4, supérieur $HS_i$ ou inférieur $LS_i$ selon le sens du courant.

Les pertes par conduction $P_{cond.}$ sont réparties entre les commutateurs à semi-conducteur 4 supérieur $HS_i$ et inférieur $LS_i$ en choisissant un rapport cyclique d'équilibrage $RC'_1$, $RC'_2$, $RC'_i$, $RC'_n$ approprié dans la limite où les différences de tensions de phases d'équilibrage vues par la machine 1 restent identiques aux différences des tensions de phases de consigne $V_1$, $V_2$, $V_i$, $V_n$.

Dans le bras de référence, on choisit au cours de cette deuxième étape 15 une valeur d'équilibrage $RC'_0$ d'un rapport cyclique d'équilibrage $RC'_1$, $RC'_2$, $RC'_i$, $RC'_n$ de manière à vérifier la relation:

$$RC'_0 * R_{on} * Iph_0{}^2 + P_{comm.} = (1 - RC'_0) * R_{on} * Iph_0{}^2$$

Cette équation exprime l'égalité des pertes entre les commutateurs à semi-conducteur supérieur $HS_i$ et inférieur $LS_i$ du bras de référence. On peut l'écrire sous la forme:

$$f(RC'_0) = (2 * RC'_0 - 1) * R_{on} * Iph_0{}^2 + P_{comm.} = 0$$

On notera ici que les équations ci-dessus correspondent au cas où les commutateurs à semi-conducteur supérieur $HS_i$ et inférieur $LS_i$ ont des résistances de conduction $R_{on}$ sensiblement égales. Lorsque ces résistances de conduction ont des valeurs différentes, notées $R_{onH}$ pour le commutateur à semi-conducteur supérieur $HS_i$ et $R_{onL}$ pour le commutateur à semi-conducteur inférieur $LS_i$, la relation ci-dessus à vérifier devient :

$$RC'_0 * R_{onH} * Iph_0{}^2 + P_{comm.} = (1 - RC'_0) * R_{onL} * Iph_0{}^2.$$

Dans la suite de la description, on continue à considérer que les commutateurs à semi-conducteur supérieur $HS_i$ et inférieur $LS_i$ ont des résistances de conduction $R_{on}$ sensiblement égales.

Selon la modélisation retenue pour le calcul des pertes de commutation $P_{comm.}$, la valeur d'équilibrage $RC'_0$ peut varier en fonction de la tension de batterie $U_{bat}$ et du courant commuté $Iph_0$.

Une troisième étape 16 de ce processus d'équilibrage 13 consiste à calculer un écart de rapport cyclique $\Delta RC$ entre cette valeur déquilibrage $RC'_0$ et le rapport cyclique de consigne $RC_i$ dans le bras de référence pris comme valeur de référence $RC_0$.

Cet écart de rapport cyclique $\Delta RC$, en étant ajouté à tous les rapports cycliques de consigne $RC_1$, $RC_2$, $RC_i$, $RC_n$, permet de générer, en sortie 12 du procédé selon l'invention, les rapports cycliques d'équilibrage $RC'_1$, $RC'_2$, $RC'_i$, $RC'_n$ qui préservent les différences de tensions entre phases en modifiant la tension de mode commun $V_0$, tout en équilibrant le bras de référence.

Une étape supplémentaire 17 du processus d'équilibrage 13 limite l'écart de rapport cyclique $\Delta RC$ de manière à ce que tous les rapports cycliques d'équilibrage $RC'_1$, $RC'_2$, $RC'_i$, $RC'_n$ soient compris dans un intervalle de 0 à 1.

En liaison avec cette **Figure 3,** l'exemple numérique suivant dans le cas d'un pont de puissance formé de commutateurs à semi-conducteur 4 est représenté de manière détaillée sur la **Figure** 3. Une charge électrique triphasée permettra de bien comprendre le procédé de pilotage d'un pont de puissance selon l'invention.

Exemple selon l'invention

De même que dans les exemples 1 et 2 ci-dessus représentatifs des procédés de pilotage d'un pont de puissance 3 connus de l'état de la technique, cet exemple s'appuie sur un système 1, 2, 3, 4, 5 qui comporte une batterie 2 présentant une tension $U_{bat}$ de 100 V et une machine triphasée 1 dont le rotor est bloqué.

L'unité de commande électronique 5 génère trois rapports cycliques de consigne:

$$RC_1 = 0,60 \quad RC_2 = 0.45 \quad RC_3 = 0.45$$

produisant trois tensions de phases de consigne (par rapport à la borne de masse B⁻ :

$$V_1 = 60 \text{ V} \quad V_2 = 45 \text{ V} \quad V_3 = 45 \text{ V}$$

La tension de mode commun $V_0$ est $(V_1 + V_2 + V_3)/3 = 50$ V

Les tensions appliquées sur les enroulements de phases sont:

$$V_1 - V_2 = 15 \text{ V} \quad V_2 - V_3 = 0 \text{ V} \quad V_3 - V_1 = -15 \text{ V}$$

qui génèrent les intensités de phases (en unité arbitraire):

$$Iph_1 = +1 \quad Iph_2 = -1/2 \quad Iph_3 = -1/2$$

Le processus d'équilibrage 13, qui est implémenté de préférence sous la forme d'un module logiciel dans l'unité de commande électronique 5 du pont de puissance 3, commence par la sélection 18 du bras dans lequel l'intensité de phase Iph0 est la plus forte parmi les trois intensités de phases $Iph_1$, $Iph_2$, $Iph_3$. Il s'agit en l'occurrence du bras numéro 1 dans lequel l'intensité est $Iph_1 = 1 = Iph_0$ (en unité arbitraire).

Le processus d'équilibrage 13 effectue ensuite:

- un premier calcul 19 des pertes par conduction en fonction de la résistance passante $R_{on}$ 20 dans les MOSFET supérieur $HS_1$ et inférieur $LS_1$ en fonction d'un rapport cyclique d'équilibrage $RC'1$ du premier bras, respectivement $RC'_1 * R_{on} * Iph_0{}^2$ et $(1 - RC'_1) * R_{on} * Iph_0{}^2$ ;
- un deuxième calcul 21 des pertes par commutation (dans ce bras) $P_{comm.} = 1/3 * R_{on} * Iph_0{}^2$ (par simplification dans cet exemple);
- la détermination 22 de la valeur d'équilibrage $RC'_0$ qui satisfait à la relation:

$$f(RC'_0) = (2 * RC'_0 - 1) * R_{on} * Iph_0^2 + P_{comm.} = 0$$

C'est-à-dire, en utilisant l'expression simplifiée des pertes par commutation $P_{comm}$ :

$$(2 * RC'_0 - 1) * R_{on} * Iph_0^2 + 1/3 * R_{on} * Iph_0^2 = 0, \text{ soit } RC'_0 = 1/3$$

Le processus d'équilibrage 13 fait ensuite l'acquisition 23 de la valeur de référence $RC_0$ du rapport cyclique de consigne correspondant au bras de référence déterminé au cours de la sélection 18, c'est-à-dire $RC_0 = RC_1 = 0.6$.

Cette acquisition 23 permet l'évaluation 24 de l'écart de rapport cyclique:

$$\Delta RC = RC'_0 - RC_0 = 0.33 - 0.60 = -0.27.$$

Cet écart de rapport cyclique $\Delta RC$ étant négatif et inférieur en valeur absolue aux rapports cycliques de consigne $RC_1 = 0,60$, $RC_2 = 0.45$, $RC_3 = 0.45$, la fonction de limitation 25 détermine qu'il est compatible avec la plage des rapports cycliques d'équilibrage fournis par un troisième calcul 26:

$$RC'_1 = RC_1 + \Delta RC = 0,60 - 0.27 = 0.33$$

$$RC'_2 = RC_2 + \Delta RC = 0.45 - 0.27 = 0.18$$

$$RC'_3 = RC_3 + \Delta RC = 0.45 - 0.27 = 0.18$$

Les tensions de phases d'équilibrage sont:

$$V'_1 = 33 \text{ V} \qquad V'_2 = 18 \text{ V} \qquad V'_3 = 18 \text{ V}$$

La tension de mode commun $V_0$ devient $V'_0 = 23$ V

On vérifie que les différences de tensions de phases vues par la machine 1 n'ont pas changé:

$$V'_1 - V'_2 = 33 \text{ V} - 18 \text{ V} = 15 \text{ V}$$

$$V'_2 - V'_3 = 18 \text{ V} - 18 \text{ V} = 0 \text{ V}$$

$$V'_3 - V'_1 = 18 \text{ V} - 33 \text{ V} = -15 \text{ V}$$

A l'issue de ce processus d'équilibrage 13, les pertes totales dans les MOSFET 4 supérieur et inférieur sont:

- MOSFET supérieur $HS_1$: $RC'_1 * R_{on} * Iph_0^2 + 1/3 * R_{on} * Iph_0^2$, soit $2/3 * R_{on}$
- MOSFET inférieur $LS_1$: $(1 - RC'_1) * R_{on} * Iph_0^2 = (1 - 1/3) * R_{on} * Iph_0^2$, soit $2/3 * R_{on}$

Par comparaison aux résultats des premier et second exemples ci-dessus, l'équilibrage des pertes dans le bras par le procédé selon l'invention permet une diminution des pertes à dissiper par le MOSFET supérieur $HS_1$ de 27% par rapport au pilotage classique, et de 33% par rapport à la stratégie de minimisation des pertes par commutation.

Pour l'ensemble du bras, les pertes deviennent $4/3 * R_{on}$, c'est-à-dire qu'elles sont identiques à celles engendrées par un pilotage MLI classique (exemple 1), mais ont augmenté de 33% par rapport à la stratégie de minimisation des pertes de commutation (exemple 2).

Cependant le meilleur rendement de l'onduleur n'est pas ce que l'on cherche au cours d'une phase de démarrage de la machine électrique tournante 1 connectée, ou en cas de rotor bloqué. La maximisation du courant admissible dans la limite de la dissipation thermique des composants devient au contraire un critère plus important, notamment quand la machine électrique tournante 1 dont il s'agit est intégrée dans un système visant les applications au véhicule automobile, et qu'elle sera soumise à de nombreux cycles d'arrêt/ relance.

Comme il va de soi, l'invention ne se limite pas aux seuls modes d'exécution préférentiels décrits ci-dessus.

Notamment les valeurs numériques données ne constituent que des exemples destinés à montrer concrètement les avantages du procédé de pilotage d'un pont de puissance 3 selon l'invention.

Le procédé selon l'invention est de préférence mis en oeuvre par microprogramme dans le dispositif de pilotage 5. Mais ce dispositif de pilotage 5 peut alternativement être basé sur une logique de commande câblée.

Les transistors de puissance de type MOSFET 4 cités ne sont pas non plus limitatifs: l'homme de métier mettra en oeuvre autant que de besoin tout autre type d'éléments à semi-conducteur tels que des transistors bipolaires, d'autres types de transistors à effet de champ, ou des thyristors susceptibles de remplir les mêmes fonctions de commutation dans un pont de puissance apte à être piloté par le dispositif de pilotage 5 selon l'invention.

L'invention embrasse donc toutes les variantes possibles de réalisation qui resteraient dans le cadre défini par les revendications ci-après.

## Revendications

1. Procédé de pilotage d'un pont de puissance (3) comprenant plusieurs bras ($B_1$, $B_2$, $B_i$, $B_n$) comportant chacun en série des commutateurs à semi-conducteur supérieur et inférieur (4) destinés à être reliés en parallèle aux première et seconde bornes ($B^+$, $B^-$) d'une source de tension (2) commune, au moins un point milieu de chacun desdits bras ($B_1$, $B_2$, $B_i$, $B_n$) étant destiné à être relié respectivement à au moins une phase d'une charge électrique (1), ledit procédé étant du type de ceux consistant à commander complémentairement lesdits commutateurs à semi- conducteur supérieur et inférieur (4) par des impulsions présentant un rapport cyclique de consigne ($RC_1$, $RC_2$, $RC_i$, $RC_n$) déterminé en fonction d'une première tension de phase de consigne ($V_1$, $V_2$, $V_i$, $V_n$), par rapport à une borne de référence de ladite charge électrique (1), et d'une tension de mode commun ($V_0$), par rapport à l'une desdites première ou seconde bornes ($B^+$, $B^-$), contrôlant des pertes par commutation (21) desdits commutateurs à semi-conducteur supérieur et inférieur (4), **caractérisé en ce que** ladite tension de mode commun ($V_0$) est déterminée de manière à obtenir un équilibrage (13) desdites pertes par commutation (21) et des pertes par conduction (19) entre lesdits commutateurs (4) à semi-conducteur supérieur et inférieur, par égalité des pertes des commutateurs (4) à semi-conducteur supérieur et inférieur du bras ($B_1$, $B_2$, $B_i$, $B_n$) dans lequel circule une plus grande intensité de courant de phase ($Iph_1$ $Iph_2$, $Iph_i$, $Iph_n$), et ledit équilibrage (13) est mis en oeuvre uniquement quand une fréquence électrique modulant ledit rapport cyclique de consigne ($RC_1$, $RC_2$, $RC_i$, $RC_n$) est inférieure ou égale à un seuil prédéterminé.

2. Procédé de pilotage d'un pont de puissance (3) selon la revendication 1, **caractérisé en ce que** ladite tension de mode commun ($V_0$) est déterminée de manière à minimiser lesdites pertes par commutation (21) quand ladite fréquence électrique est supérieure audit seuil prédéterminé.

3. Procédé de pilotage d'un pont de puissance (3) selon l'une quelconque des revendications 1 ou 2 précédentes, **caractérisé en ce que** ledit équilibrage (13) est réalisé en choisissant (15, 22) un rapport cyclique d'équilibrage ($RC_1$, $RC_2$, $RC_i$, $RC_n$) de manière à vérifier la relation :

$$RC'_O * R_{onH} * Iph_O^2 + P_{comm.} = (1 - RC'_O) * R_{onL} * Iph_0^2$$

où $R_{onH}$ et $R_{onL}$ sont respectivement les résistances de conduction (20) desdits commutateurs à semi-conducteur supérieur et inférieur (4), $P_{comm}$ représente lesdites pertes par commutation (21) et $Iph_I$ une intensité de phase circulant dans ladite phase, dans une limite où ledit rapport cyclique d'équilibrage ($RC_1$, $RC_2$, $RC_i$, $RC_n$) conduit à une première tension de phase d'équilibrage dont une différence courante avec une seconde tension de phase d'équilibrage est identique à une différence initiale entre ladite première tension de phase de consigne ($V_1$, $V_2$, $V_i$, $V_n$) et une seconde tension de phase de consigne ($V_1$, $V_2$, $V_i$, $V_n$).

4. Procédé de pilotage d'un pont de puissance (3) selon la revendication 3, **caractérisé en ce que** ledit équilibrage (13) est réalisé uniquement dans un bras de référence où ladite intensité de phase ($Iph_i$) est la plus grande (14, 18) parmi lesdits bras ($B_1$, $B_2$, $B_i$, $B_n$).

5. Procédé de pilotage d'un pont de puissance (3) selon la revendication 4, **caractérisé en ce que** ledit équilibrage (13) est obtenu en modifiant (12, 26) ledit rapport cyclique de consigne ($RC_1$, $RC_2$, $RC_i$, $RC_n$) correspondant à chacun desdits bras ($B_1$, $B_2$, $B_i$, $B_n$) par un écart de rapport cyclique (ARC) entre une valeur de référence (RCo) d'un rapport cyclique de consigne ($RC_1$, $RC_2$, $RC_i$, $RC_n$) et une valeur d'équilibrage (RCO) d'un rapport cyclique d'équilibrage ($RC'_1$, $RC'_2$, $RC'_i$, $RC'_n$) déterminées (16, 24) dans ledit bras de référence.

6. Dispositif de pilotage (5) d'un pont de puissance (3) destiné à être relié à une charge électrique (1) et apte à la mise en oeuvre du procédé selon l'une quelconque des revendications 1 à 5 précédentes, **caractérisé en ce qu'**il comprend :

   - une logique de commande câblée et configurée pour mettre en oeuvre ledit procédé de pilotage selon l'une quelconque des revendications précédentes ; ou
   - un microprogramme configuré pour mettre en oeuvre ledit procédé de pilotage selon l'une quelconque des revendications précédentes.

7. Pont de puissance (3) piloté par le dispositif de pilotage (5) et dispositif de pilotage (5) selon la revendication 6 précédente, le pont de puissance (3) comprenant plusieurs bras ($B_1$, $B_2$, $B_i$, $B_n$) comportant chacun en série des commutateurs à semi-conducteur supérieur et inférieur (4), **caractérisé en ce que** lesdits commutateurs à semi-conducteur supérieur et inférieur (4) sont constitués chacun d'un élément de commutation à semi-conducteur (7) et d'une diode de roue libre (6) en parallèle.

8. Pont de puissance (3) piloté par le dispositif de pilotage (5) et dispositif de pilotage (5) selon la revendication 7 précédente, **caractérisé en ce que** ladite diode de roue libre (6) est une diode intrinsèque d'un transistor de type MOSFET.

9. Système de machine électrique tournante comprenant :

   - une charge électrique polyphasée (1);
   - une source de tension (2);
   - un pont de puissance (3) piloté par le dispositif de pilotage (5) et dispositif de pilotage (5) selon l'une quelconque des revendications 7 ou 8, le pont de puissance étant relié en aval à ladite charge électrique (1) et en amont à ladite source de tension (2).

**Patentansprüche**

1. Verfahren zum Ansteuern einer Leistungsbrücke (3) mit mehreren Zweigen ($B_1$, $B_2$, Bi, $B_n$) mit jeweils einem oberen und einem unteren Halbleiterschalter (4) in Reihe, die mit einem ersten und einem zweiten Anschluss ($B^+$, $B^-$) einer gemeinsamen Spannungsquelle (2) parallel geschaltet werden sollen, wobei mindestens ein Mittelpunkt von jedem der Zweige ($B_1$, $B_2$, $B_i$, $B_n$) jeweils mit mindestens einer Phase einer elektrischen Last (1) verbunden werden soll, wobei das Verfahren vom Typ jener Verfahren ist, die darin bestehen, die oberen und unteren Halbleiterschalter (4) durch Impulse komplementär zu steuern, die ein zyklisches Sollverhältnis ($RC_1$, $RC_2$, $RC_i$, $RC_n$) aufweisen, das in Abhängigkeit von einer ersten Sollphasenspannung ($V_1$, $V_2$, $V_i$, $V_n$) in Bezug auf einen Referenzanschluss der elektrischen Last (1) und einer Gleichtaktspannung ($V_0$) in Bezug auf einen des ersten oder des zweiten Anschlusses ($B^+$, $B^-$) bestimmt wird, wobei Schaltverluste (21) der oberen und unteren Halbleiterschalter (4) kontrolliert werden, **dadurch gekennzeichnet, dass** die Gleichtaktspannung ($V_0$) bestimmt wird, um einen Abgleich (13) der Schaltverluste (21) und der Leitungsverluste (19) zwischen den oberen und unteren Halbleiterschaltern (4) durch Gleichheit der Verluste der oberen und unteren Halbleiterschalter (4) des Zweigs ($B_1$, $B_2$, $B_i$, $B_n$), in dem eine größere Intensität des Phasenstroms ($Iph_1$, $Iph_2$, $Iph_i$, $Iph_n$) zirkuliert, zu erhalten, und der Abgleich (13) nur ausgeführt wird, wenn eine elektrische Frequenz, die das zyklische Sollverhältnis ($RC_1$, $RC_2$, $RC_i$, $RC_n$) moduliert, kleiner oder gleich einem vorbestimmten Schwellenwert ist.

2. Verfahren zum Ansteuern einer Leistungsbrücke (3) nach Anspruch 1, **dadurch gekennzeichnet, dass** die Gleichtaktspannung ($V_0$) bestimmt wird, um die Schaltverluste (21) zu minimieren, wenn die elektrische Frequenz größer ist als der vorbestimmte Schwellenwert.

3. Verfahren zum Ansteuern einer Leistungsbrücke (3) nach einem der vorangehenden Ansprüche 1 oder 2, **dadurch gekennzeichnet, dass** der Abgleich (13) durch Wählen (15, 22) eines zyklischen Abgleichsverhältnisses ($RC_1$, $RC_2$, $RC_i$, $RC_n$) verwirklicht wird, um die folgende Beziehung zu überprüfen:

$$RC'_0 \cdot R_{onH} \cdot Iph_0^2 + P_{comm} = \left(1 - RC'_o\right) \cdot R_{onL} \cdot Iph_0^2$$

wobei $R_{onH}$ und $R_{onL}$ jeweils die Leitungswiderstände (20) der oberen und unteren Halbleiterschalter (4) sind, $P_{comm}$ die Schaltverluste (21) darstellt und $Iph_l$ eine Phasenintensität ist, die in der Phase zirkuliert, in einer Grenze, in der das zyklische Abgleichsverhältnis ($RC_1$, $RC_2$, $RC_i$, $RC_n$) zu einer ersten Abgleichsphasenspannung führt, von der eine aktuelle Differenz mit einer zweiten Abgleichsphasenspannung zu einer anfänglichen Differenz zwischen der ersten Sollphasenspannung ($V_1$, $V_2$, $V_i$, $V_n$) und einer zweiten Sollphasenspannung ($V_1$, $V_2$, $V_i$, $V_n$) identisch ist.

**4.** Verfahren zum Ansteuern einer Leistungsbrücke (3) nach Anspruch 3, **dadurch gekennzeichnet, dass** der Abgleich (13) nur in einem Referenzzweig verwirklicht wird, in dem die Phasenintensität ($Iph_i$) unter den Zweigen ($B_1$, $B_2$, $B_i$, $B_n$) am größten (14, 18) ist.

**5.** Verfahren zum Ansteuern einer Leistungsbrücke (3) nach Anspruch 4, **dadurch gekennzeichnet, dass** der Abgleich (13) durch Modifizieren (12, 26) des zyklischen Sollverhältnisses ($RC_1$, $RC_2$, $RC_i$, $RC_n$), das jedem der Zweige ($B_1$, $B_2$, $B_i$, $B_n$) entspricht, durch einen Abstand des zyklischen Verhältnisses (ARC) zwischen einem Referenzwert (RCo) eines zyklischen Sollverhältnisses ($RC_1$, $RC_2$, $RC_i$, $RC_n$) und einem Abgleichswert (RCO) eines zyklischen Abgleichsverhältnisses ($RC'_1$, $RC'_2$, $RC'_i$, $RC'_n$), die im Referenzzweig bestimmt (16, 24) werden, erhalten wird.

**6.** Vorrichtung zum Ansteuern (5) einer Leistungsbrücke (3), die mit einer elektrischen Last (1) verbunden werden soll und zur Ausführung des Verfahrens nach einem der vorangehenden Ansprüche 1 bis 5 geeignet ist, **dadurch gekennzeichnet, dass** sie Folgendes umfasst:

- eine Steuerlogik, die verkabelt und konfiguriert ist, um das Ansteuerverfahren nach einem der vorangehenden Ansprüche auszuführen; oder
- ein Mikroprogramm, das dazu konfiguriert ist, das Ansteuerverfahren nach einem der vorangehenden Ansprüche auszuführen.

**7.** Leistungsbrücke (3), die durch die Ansteuervorrichtung (5) angesteuert wird, und Ansteuervorrichtung (5) nach dem vorangehenden Anspruch 6, wobei die Leistungsbrücke (3) Folgendes umfasst:

mehrere Zweige ($B_1$, $B_2$, $B_i$, $B_n$) mit jeweils einem oberen und einem unteren Halbleiterschalter (4) in Reihe, **dadurch gekennzeichnet, dass** die oberen und unteren Halbleiterschalter (4) jeweils aus einem Halbleiterschaltelement (7) und einer parallelen Freilaufdiode (6) gebildet sind.

**8.** Leistungsbrücke (3), die durch die Ansteuervorrichtung (5) angesteuert wird, und Ansteuervorrichtung (5) nach dem vorangehenden Anspruch 7, **dadurch gekennzeichnet, dass** die Freilaufdiode (6) eine intrinsische Diode eines Transistors vom MOSFET-Typ ist.

**9.** System einer elektrischen Rotationsmaschine, das Folgendes umfasst:

- eine mehrphasige elektrische Last (1);
- eine Spannungsquelle (2);
- eine Leistungsbrücke (3), die durch die Ansteuervorrichtung (5) angesteuert wird, und eine Ansteuervorrichtung (5) nach einem der Ansprüche 7 oder 8, wobei die Leistungsbrücke nachgeschaltet mit der elektrischen Last (1) und vorgeschaltet mit der Spannungsquelle (2) verbunden ist.

**Claims**

**1.** Method for driving a power bridge (3) comprising a plurality of arms ($B_1$, $B_2$, $B_i$, $B_n$) each including, in series, upper and lower semiconductor switches (4) intended to be linked in parallel to the first and second terminals ($B^+$, $B^-$) of a common voltage source (2), at least one centre tap of each of said arms ($B_1$, $B_2$, $B_i$, $B_n$) being intended respectively to be linked to at least one phase of an electrical load (1), said method being of the type consisting in complementarily commanding said upper and lower semiconductor switches (4) by way of pulses having a setpoint duty cycle ($RC_1$, $RC_2$, $RC_i$, $RC_n$) determined on the basis of a first setpoint phase voltage ($V_1$, $V_2$, $V_i$, $V_n$), with respect to a reference terminal of said electrical load (1), and of a common-mode voltage ($V_0$), with respect to one of said first or second terminals ($B^+$, $B^-$), controlling switching losses (21) of said upper and lower semiconductor switches (4), **character-**

**ized in that** said common-mode voltage ($V_0$) is determined in such a way as to achieve balancing (13) of said switching losses (21) and conduction losses (19) between said upper and lower semiconductor switches (4), by equalizing the losses of the upper and lower semiconductor switches (4) of the arm ($B_1$, $B_2$, $B_i$, $B_n$) in which a higher-magnitude phase current ($Iph_1$, $Iph_2$, $Iph_i$, $Iph_n$) is flowing, and said balancing (13) is implemented only when an electrical frequency modulating said setpoint duty cycle ($RC_1$, $RC_2$, $RC_i$, $RC_n$) is lower than or equal to a predetermined threshold.

2. Method for driving a power bridge (3) according to Claim 1, **characterized in that** said common-mode voltage ($V_0$) is determined in such a way as to minimize said switching losses (21) when said electrical frequency is greater than said predetermined threshold.

3. Method for driving a power bridge (3) according to either one of preceding Claims 1 and 2, **characterized in that** said balancing (13) is achieved by selecting (15, 22) a balancing duty cycle ($RC_1$, $RC_2$, $RC_i$, $RC_n$) in such a way as to satisfy the relationship:

$$RC'_o * R_{onH} * Iph_o^2 + P_{comm.} = (1 - RC'_o) * R_{onL} * Iph_0^2$$

where $R_{onH}$ and $R_{onL}$ are respectively the conduction resistances (20) of said upper and lower semiconductor switches (4), $P_{comm}$ represents said switching losses (21) and $Iph_i$ represents a phase current flowing in said phase, within a limit in which said balancing duty cycle ($RC_1$, $RC_2$, $RC_i$, $RC_n$) leads to a first balancing phase voltage whose current difference from a second balancing phase voltage is identical to an initial difference between said first setpoint phase voltage ($V_1$, $V_2$, $V_i$, $V_n$) and a second setpoint phase voltage ($V_1$, $V_2$, $V_i$, $V_n$).

4. Method for driving a power bridge (3) according to Claim 3, **characterized in that** said balancing (13) is performed only in a reference arm where said phase current ($Iph_i$) is the greatest (14, 18) out of said arms ($B_1$, $B_2$, $B_i$, $B_n$).

5. Method for driving a power bridge (3) according to Claim 4, **characterized in that** said balancing (13) is achieved by modifying (12, 26) said setpoint duty cycle ($RC_1$, $RC_2$, $RC_i$, $RC_n$) corresponding to each of said arms ($B_1$, $B_2$, $B_i$, $B_n$) by a duty cycle difference (ARC) between a reference value (RCo) of a setpoint duty cycle ($RC_1$, $RC_2$, $RC_i$, $RC_n$) and a balancing value (RCO) of a balancing duty cycle ($RC'_1$, $RC'_2$, $RC'_i$, $RC'_n$) that are determined (16, 24) in said reference arm.

6. Device (5) for driving a power bridge (3) intended to be linked to an electrical load (1) and able to implement the method according to any one of preceding Claims 1 to 5, **characterized in that** it comprises:

   - a logic control unit wired and configured so as to implement said driving method according to any one of the preceding claims; or
   - a microprogram configured so as to implement said driving method according to any one of the preceding claims.

7. Power bridge (3) driven by the driving device (5), and driving device (5) according to preceding Claim 6, the power bridge (3) comprising a plurality of arms ($B_1$, $B_2$, $B_i$, $B_n$) each including, in series, upper and lower semiconductor switches (4), **characterized in that** said upper and lower semiconductor switches (4) are each formed of a semiconductor switching element (7) and of a freewheeling diode (6) in parallel.

8. Power bridge (3) driven by the driving device (5), and driving device (5) according to preceding Claim 7, **characterized in that** said freewheeling diode (6) is an intrinsic diode of a MOSFET transistor.

9. Rotating electrical machine system comprising:

   - a polyphase electrical load (1);
   - a voltage source (2);
   - a power bridge (3) driven by the driving device (5), and the driving device (5) according to either one of Claims 7 and 8, the power bridge being linked downstream to said electrical load (1) and upstream to said voltage source (2).

Fig. 1

$V_i$  i=1 à n
$V_0$ — 9

$RC_i$  i=1 à n — 8

N — $\Omega < \Omega_0$ — 10

O — 13

$Ipho = Max(Iph_i)$  i=1 à n — 14

$f(RC'_0) = 0$ — 15

$\Delta RC = RC'_0 - RC_0$ — 16

$\Delta RC = Lim(\Delta RC)$ — 17

$\Delta RC = 0$ — 11

$RC'_i = RC_i + \Delta RC$  i=1 à n — 12

Fig. 2

Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2895597
- JP 2003189668 B